# EUROPEAN PATENT APPLICATION

(11) **EP 2 587 298 A1**
(43) Date of publication of application: **01.05.2013**
(21) Application number: 11798071.4
(22) Date of filing: 17.06.2011
(51) Int. Cl.: G02B 21/36

(54) **IMAGE GENERATION DEVICE**

(30) Priority: 23.06.2010 JP 2010142882
(71) Applicant: Hamamatsu Photonics K.K., Hamamatsu-shi, Shizuoka 435-8558 (JP)
(72) Inventor: TERADA Hirotoshi, Hamamatsu-shi Shizuoka 435-8558 (JP); IWAKI Yoshitake, Hamamatsu-shi Shizuoka 435-8558 (JP); NAKAMURA Tomonori, Hamamatsu-shi Shizuoka 435-8558 (JP); TAKAHASHI Teruo, Hamamatsu-shi Shizuoka 435-8558 (JP)
(74) Representative: HOFFMANN EITLE
(86) International application number: PCT/JP2011/063976
(87) International publication number: WO 2011/162187

(57) **Abstract**

An image generation device 1 comprises a laser light source 3, a laser output control unit 11, a laser scanner 5, a modulation pattern control unit 15 for such control as to irradiate the object with illumination light having a plurality of spatial modulation patterns, an electric signal detector 7 for detecting an electric signal issued from the object A, an electric signal imaging unit 17 for generating a two-dimensional characteristic image including characteristic distribution information associating illumination position information with characteristic information, and an image data operation unit 19 for generating a pattern image of the object A according to a plurality of characteristic images generated so as to correspond to the plurality of spatial modulation patterns.

## Description

### Technical Field

The present invention relates to an image generation device which generates an image by irradiating an object to be measured with spatially modulated light.

### Background Art

Optical devices which irradiate semiconductor devices and the like with spatially modulated light and observe resulting images have conventionally been known. For example, the following Patent Literature 1 discloses an optical device in which a sample is irradiated with light through a diffraction grading from a light source device, and a sample image generated at this time is captured by a CCD camera. This light source device obtains a plurality of modulated images by capturing images while moving the diffraction grading at a constant velocity in a direction perpendicular to stripes of the diffraction grating, and then subjects the modulated images to image processing, so as to form an image of the sample. The following Patent Literature 2 discloses a microscope device in which an SLM (Spatial Light Modulator) is arranged in an optical path of illumination light in order to irradiate a sample with spatially modulated light.

### Citation List

### Patent Literature

Patent Literature 1: Japanese Patent Application Laid-Open No. 2001-117010
Patent Literature 2: Japanese Patent Application Laid-Open No. 2007-199572

### Summary of Invention

### Technical Problem

Since the above-mentioned conventional devices for generating images irradiate a sample with spatially modulated light and capture the resulting sample image through an optical system including an objective lens, an image-forming lens, and the like, however, there is a limit to improving the resolution of the finally generated two-dimensional image of the sample. That is, the upper limit of resolution in the two-dimensional image of the sample tends to be determined by optical performances of the optical system and the pixel resolution and the sensitivity of the two-dimensional imaging device.

In view of such a problem, it is an object of the present invention to provide an image generation device which can obtain a pattern image of a sample having an improved resolution with a simple device structure.

### Solution to Problem

For achieving the above-mentioned object, the image generation device in accordance with one aspect of the present invention is an image generation device for generating an image of an object to be measured, the device comprising a laser light source for emitting laser light, a laser modulation unit for modulating an intensity of the laser light, a laser scanning unit for scanning an irradiation position of the laser light with respect to the object, a control unit for controlling the laser modulation unit and laser scanning unit so as to irradiate the object with illumination light having a plurality of spatial modulation patterns, a detection unit for detecting a signal issued from the object in response to irradiation with the illumination light having the plurality of spatial modulation patterns, a signal generation unit for producing characteristic distribution information associating irradiation position information concerning the irradiation position of the illumination light controlled by the control unit with characteristic information concerning a characteristic of the signal detected by the detection unit in response to the irradiation with the laser light at the irradiation position and generating a two-dimensional characteristic image including a plurality of pieces of the characteristic distribution information corresponding to the spatial modulation pattern, and an image processing unit for generating a pattern image of the object according to a plurality of two-dimensional characteristic images generated so as to correspond to the plurality of spatial modulation patterns.

In thus constructed image generation device, the laser light emitted from the laser light source irradiates an object to be measured such as a semiconductor device or biological sample, while its intensity is modulated by the laser modulation unit and its irradiation position with respect to the object is scanned by the laser scanning unit. Here, while the control unit controls the laser modulation unit and laser scanning unit so as to irradiate the object with illumination light having a plurality of two-dimensional spatial modulation patterns, the detection unit detects a signal issued from the object. Further, while characteristic distribution information associating irradiation position information concerning the irradiation position of the illumination light with information concerning a characteristic of the signal detected in response to the irradiation with the laser light at the irradiation position is produced corresponding to each spatial modulation pattern, a two-dimensional characteristic image is generated so as to correspond to each spatial modulation pattern, and the image processing unit generates a pattern image of the object according to a plurality of two-dimensional characteristic images. This makes it unnecessary for the pattern image being acquired from the object to pass through an optical system including an objective lens, an image-forming lens, and the like and thus can easily improve the resolution of the pattern image of the sample. In addition, the phase and orientation of spatial modulation patterns of illumination light irradiating the object can be changed easily, so that a high-resolution image having a desirable position and orientation can be obtained rapidly.

### Advantageous Effects of Invention

The present invention can obtain a pattern image of a sample having an improved resolution with a simple device structure.

### Brief Description of Drawings

Fig. 1 is a block diagram illustrating the structure of the image generation device in accordance with a first embodiment of the present invention;
Fig. 2 is a conceptual diagram illustrating a spatial modulation pattern of illumination light defined by a modulation pattern control unit in Fig. 1;
Fig. 3 is a conceptual diagram illustrating a spatial modulation pattern of illumination light defined by the modulation pattern control unit in Fig. 1;
Fig. 4 is a conceptual diagram illustrating a spatial modulation pattern of illumination light defined by the modulation pattern control unit in Fig. 1;
Fig. 5 is a block diagram illustrating the structure of the image generation device in accordance with a second embodiment of the present invention;
Fig. 6 is a schematic structural diagram illustrating a detailed structure of an optical signal detector and its surroundings in the image generation device of Fig. 5;
Fig. 7 is a block diagram illustrating the structure of the image generation device in accordance with a third embodiment of the present invention;
Fig. 8 is a schematic structural diagram illustrating a detailed structure of the optical signal detector and its surroundings in the image generation device of Fig. 7;
Fig. 9 is a schematic structural diagram illustrating an optical system which is a modified example of the present invention; and
Fig. 10 is a schematic structural diagram illustrating a laser light source which is a modified example of the present invention.

### Description of Embodiments

In the following, preferred embodiments of the present invention will be explained in detail with reference to the drawings. In the drawings, the same or equivalent parts will be referred to with the same signs while omitting their overlapping descriptions.

### First Embodiment

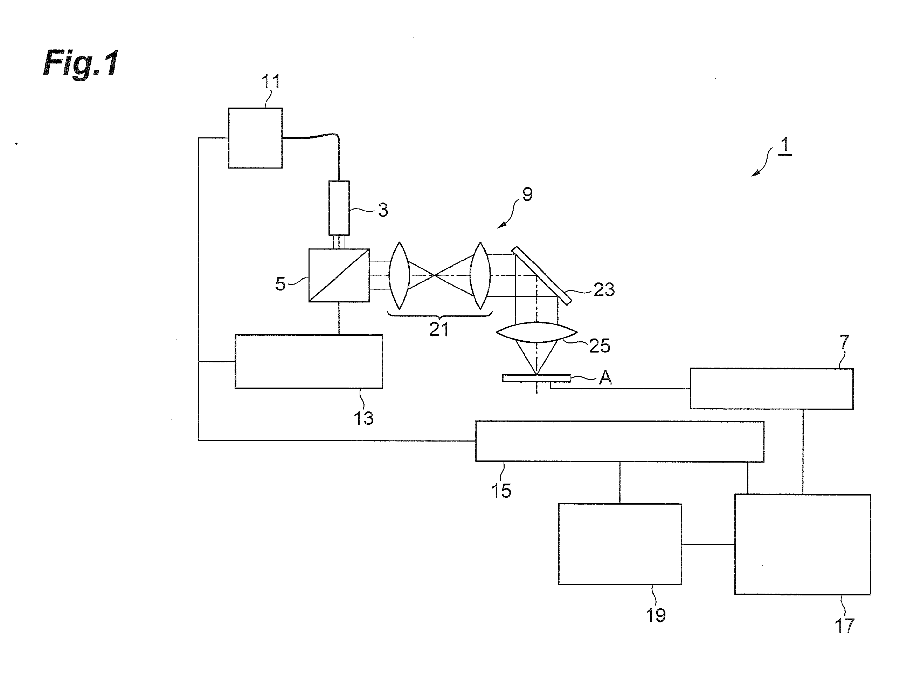

Fig. 1 is a block diagram illustrating the structure of an image generation device 1 in accordance with the first embodiment of the present invention. The image generation device 1 illustrated in Fig. 1 is a device for scanning an object to be measured which is an electric device such as a semiconductor device with illumination light according to a plurality of spatial modulation patterns, detecting a plurality of characteristic distributions of electric signals issued from the object A in response thereto, and obtaining a high-resolution pattern image of the object on the basis of the plurality of characteristic distributions. The image generation device 1 comprises a laser light source 3 for emitting laser light, a laser scanner (laser scanning unit) 5, an electric signal detector (detection unit) 7 for detecting electric signals issued from the object A, an optical system 9 for guiding the laser light from the laser light source 3 to the object A, a laser output control unit (laser modulation unit) 11 for controlling the output intensity of the laser light source 3, a scanner control unit 13 for controlling operations of the laser scanner 5, a modulation pattern control unit 15 for controlling the spatial modulation patterns irradiating the object A, an electric signal imaging unit (signal generation unit) 17 for imaging electric characteristics of the electric signals detected by the electric signal detector 7, and an image data operation unit (image processing unit) 19 for generating a pattern image of the object A by using imaging signals generated by the electric signal imaging unit 17.

Specifically, the optical system 9 is constituted by a relay lens 21, a mirror 23, and an objective lens 25. The relay lens 21 is an optical system for efficiently guiding the laser light, whose irradiation angle is oscillated by the laser scanner 5, to the objective lens 25 and acts to project the exit pupil of the objective lens 25 onto a reflecting surface of the laser scanner 5, so that the laser light reflected by the laser scanner 5 securely reaches the objective lens 25. Here, the mirror 23 may be omitted.

The laser scanner 5 is an optical system which changes the advancing direction of the laser light, so as to scan its irradiation position two-dimensionally. That is, the laser scanner 5 changes the incident angle of the laser light incident on the relay lens 21, thereby two-dimensionally scanning the irradiation position on the front face of the object A of the laser light irradiating the same through the optical system 9. Employable as thus configured laser scanner 5 is a galvanometer mirror having two mirrors whose axes of rotation are orthogonal to each other, while their angles of rotation are electrically controllable. Examples of others employable as the laser scanner 5 include polygon mirrors, MEMS (Micro Electro Mechanical System) mirrors, AOD (acousto-optical deflectors), resonant scanners (resonance type galvanometer scanners), and EO scanners (electro-optical deflectors).

Here, the intensity of the laser light issued from the laser light source 3 is adapted to be modulated by a control signal from the laser output control unit 11 connected to the laser light source 3, while the position at which the front face of the object A is irradiated with the laser light through the laser scanner 5 is changeable by a control signal from the scanner control unit 13 connected to the laser scanner 5. The modulation pattern control unit 15 is connected to the laser output control unit 11 and scanner control unit 13, so as to control them such that the object A is irradiated with illumination light according to a plurality of predetermined spatial modulation patterns.

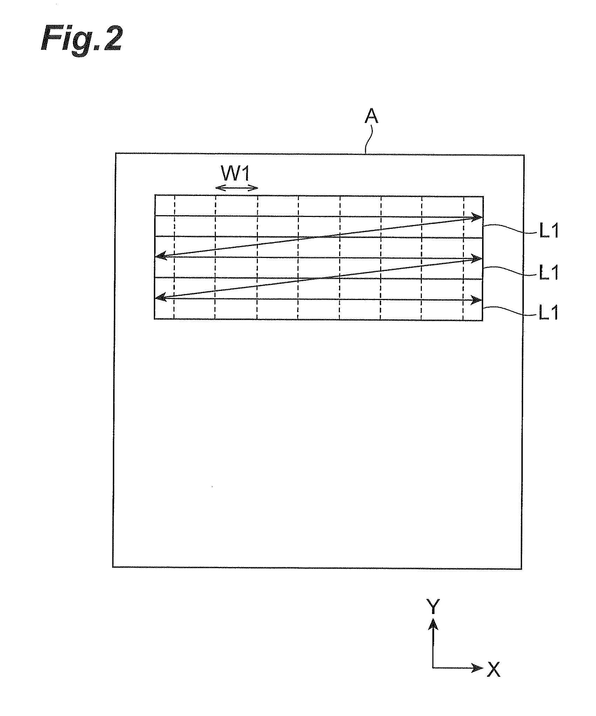

Spatial modulation patterns defined by the modulation pattern control unit 15 will now be exemplified with reference to Figs. 2 to 4.

Figs. 2 to 4 illustrate states where the object A is irradiated with the respective spatial modulation patterns defined by the modulation pattern control unit 15. As illustrated in Fig. 2, the modulation pattern control unit 15 initially controls the laser light so as to move its irradiation position along an X axis which is a predetermined direction along a plane of the object A, while modulating the irradiation intensity of the laser light such that the intensity distribution along the X axis periodically increases and decreases according to a trigonometric function (sin function or cos function). In this diagram, arrows indicate how the laser irradiation position is changed. This forms a band-shaped irradiation pattern L1 periodically modulated by a width W1 along the X axis. Subsequently, the modulation pattern control unit 15 shifts the laser irradiation position along a Y axis which is perpendicular to the X axis and then repeats the formation of the band-shaped irradiation pattern L1 by controlling the movement of the laser light irradiation position along the X direction and the modulation of the laser light intensity. As a result, a spatial modulation pattern having stripes arranged in a row along the Y axis with a desirable pitch W1 can be produced. The intensity of the laser light may also be modulated by periodic ON/OFF.

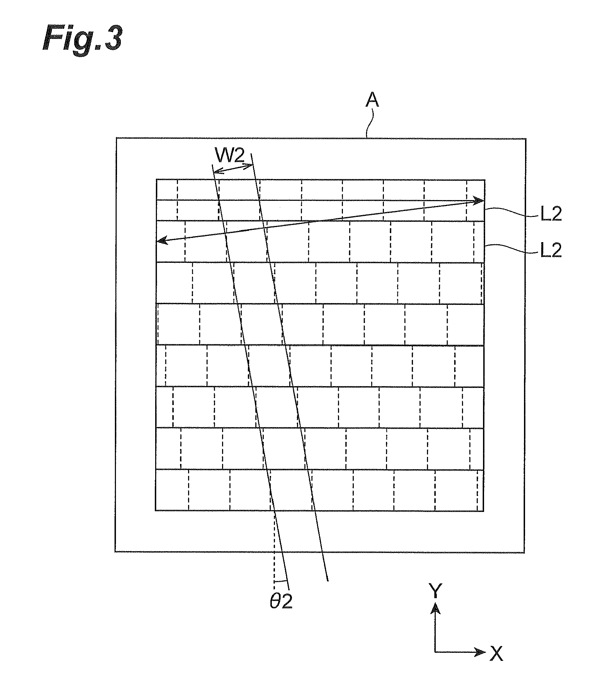

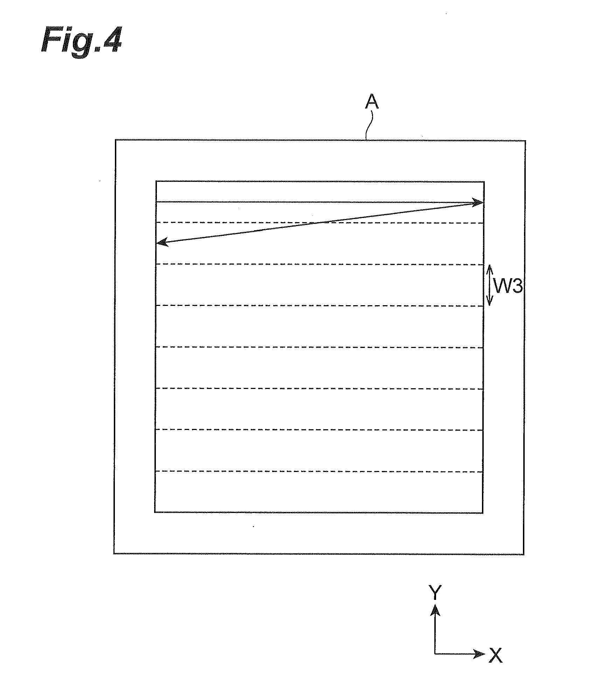

As illustrated in Fig. 3, the modulation pattern control unit 15 may control the modulation of the laser light intensity such that the spatial phase of a band-shaped irradiation pattern L2 along the X axis gradually shifts between patterns adjacent to each other along the Y axis. This can produce a spatial modulation pattern approximating a stripe pattern having a desirable pitch W2 tilted by a desirable angle θ2 from the Y axis. As illustrated in Fig. 4, the modulation pattern control unit 15 may control the modulation so as to keep a uniform irradiation intensity in laser light during one laser light scan along the X axis and modulate the irradiation intensity among a plurality of band-shaped irradiation patterns arranged in a row along the Y axis. This can produce a spatial modulation pattern having stripes along the X axis with a desirable pitch W3. Preferred as the spatial modulation pattern is a stripe pattern having an n-fold rotational symmetry (where n is 3 or greater).

In synchronization with irradiation timings of illumination light having spatial modulation patterns such as those mentioned above, the electric signal detector 7 detects electric signals such as photo induced currents. For example, the electric signal detector 7 detects a characteristic value such as a current value of an photo induced current occurring in response to irradiation with the laser light as a voltage difference between two terminals of the object A. The electric signal imaging unit 17 is connected to the electric signal detector 7 and modulation pattern control unit 15 and forms an image of the characteristic value detected by the electric signal detector 7. That is, as irradiation position information on XY coordinates or the like, the electric signal imaging unit 17 specifies the irradiation position of laser light on the object A when the characteristic value is detected. Then, the electric signal imaging unit 17 produces characteristic distribution information associating the irradiation position information with characteristic information concerning the characteristic value of the electric signal detected in response to the irradiation with laser light at the irradiation position corresponding thereto. Further, the electric signal imaging unit 17 generates a two-dimensional characteristic image including a plurality of pieces of characteristic distribution information corresponding to the respective spatial modulation patterns having irradiated the object A. For example, the electric signal imaging unit 17 generates a two-dimensional characteristic image signal in which the characteristic values are arranged at their corresponding coordinates on the object A. When spatial modulation patterns such as those illustrated in Figs. 2 to 4 are formed continuously in terms of time, the electric signal imaging unit 17 generates different characteristic images for the respective spatial modulation patterns.

The plurality of characteristic images generated by the electric signal imaging unit 17 are subjected to image processing by the image data operation unit 19. For example, the image data operation unit 19 irradiates the front face of the object A with a spatial modulation pattern having stripes in a row along the Y axis, while changing the spatial phase by a desirable frequency, so as to generate a plurality of characteristic images. The plurality of characteristic images are obtained here as moiré (interference fringe) components caused by the stripe pattern of the illumination light and the structure of the object A, while spatial high-frequency components resulting from fine structures of the object A appear as being converted into low-frequency components as moirés. Therefore, from a characteristic distribution obtained from the plurality of characteristic images, the image data operation unit 19 produces an original characteristic distribution image resulting from the actual structure of the object A according to the frequency information of the spatial modulation pattern used for irradiation. By irradiating the sample A with a plurality of spatial modulation patterns along four directions, while changing the spatial phase by a desirable frequency, and then performing the same image processing, the image data operation unit 19 can produce a plurality of characteristic distribution images and generate a high-resolution pattern image whose resolution is enhanced in the four directions from the plurality of characteristic distribution images.

In the image generation device 1 explained in the foregoing, the object A is irradiated with the laser light emitted from the laser light source 3, while its intensity is modulated by the laser output control unit 11 and its irradiation position with respect to the object A is scanned by the laser scanner 5. At this time, while the modulation pattern control unit 15 controls the laser output control unit 11 and laser scanner 5 such that the object A is irradiated with illumination light having a plurality of two-dimensional spatial modulation patterns, the electric signal detector 7 detects an electric signal issued from the object A. The electric signal imaging unit 17 produces, corresponding to each spatial modulation pattern, characteristic distribution information associating irradiation position information concerning the irradiation position of the illumination light with information concerning a characteristic of the electric signal detected in response to the irradiation with the illumination light at the irradiation position and generates a two-dimensional characteristic image corresponding to each spatial modulation pattern, while the image data operation unit 19 generates a pattern image of the object A according to a plurality of two-dimensional characteristic images. This makes it unnecessary for the pattern image being acquired from the object A to pass through an optical system including an objective lens, an image-forming lens, and the like and thus can easily improve the resolution of the pattern image of the sample.

The image generation device 1 can also easily acquire high-resolution pattern images of the object A without necessitating complicated driving mechanisms for driving diffraction gratings and the like. That is, only a simple optical system and a laser scanner or the like are required to be mounted in this embodiment. In addition, the phase and orientation of spatial modulation patterns of illumination light irradiating the object can be changed easily under the control of the modulation pattern control unit 15, so that a high-resolution image having a desirable position and orientation can be obtained rapidly. By contrast, the conventional device using an SLM (Spatial Light Modulator) for generating a spatial modulation pattern necessitates a very fine SLM in order to diffract light to a given direction by a given angle. When varying the phase of stripes to be projected on a sample among three kinds, for example, three times the number of stripes at a resolution limit equals the number of pixels required in one axial direction. When a stripe is desired to be formed in an oblique direction with respect to an axis, three times more number of pixels are further necessary for adjusting the pixels to the stripe pitch, since each pixel has a rectangular form. As a result, the conventional device necessitates an expensive SLM. Problems such as transmission/reflection losses in the SLM, losses at pixel joints, zero-order light, and higher-order light also occur.

In the case where the object A exhibits a nonlinear reaction, e.g., it generates multiphoton absorption such as two-photon absorption or causes second harmonic generation (SHG), techniques in which laser light is modulated while being scanned two-dimensionally are likely to cause such a reaction. As a result, imaging with a higher resolution is possible by utilizing two-photon absorption, for example.

Since the laser output control unit 11 modulates the intensity of the laser light so as to change it according to a trigonometric function, spatial modulation patterns can be formed easily.

### Second Embodiment

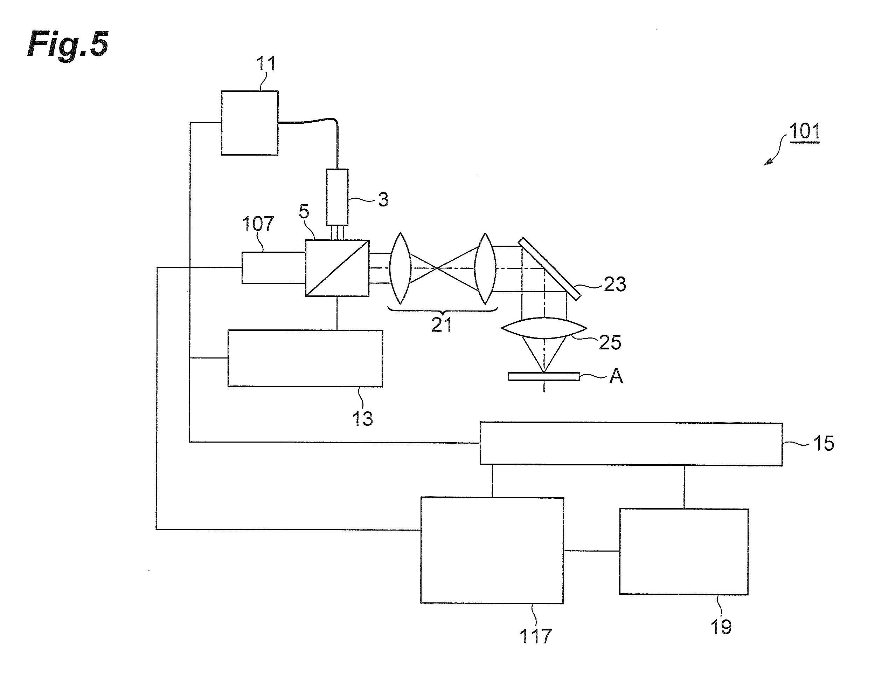

Fig. 5 is a block diagram illustrating the structure of an image generation device 101 in accordance with the second embodiment of the present invention. The image generation device 101 illustrated in this diagram is a device for irradiating an object to be measured such as a semiconductor device with illumination having a plurality of spatial modulation patterns, detecting reflected light issued from the object A in response thereto as an optical signal, and obtaining a high-resolution pattern image of the object on the basis of a characteristic distribution of the optical signal. This image generation device 101 differs from the first embodiment in that it comprises an optical signal detector 107 and an optical signal imaging unit 117 in place of the electric signal detector 7 and electric signal imaging unit 17.

The optical signal detector 107 detects reflected light or the like issued from the object A as an optical signal. An example of the optical signal detector 107 is a photoelectric transducer such as a photomultiplier or phototube which outputs a characteristic value such as the intensity of reflected light as an electric signal. For each of a plurality of spatial modulation patterns, the optical signal imaging unit 117 generates a two-dimensional characteristic image (characteristic image) including a plurality of pieces of characteristic distribution information from characteristic distribution information associating characteristic information concerning the characteristic value of the optical signal detected by the optical signal detector 107 with irradiation position information of laser light on the object A at the time when the characteristic value is detected.

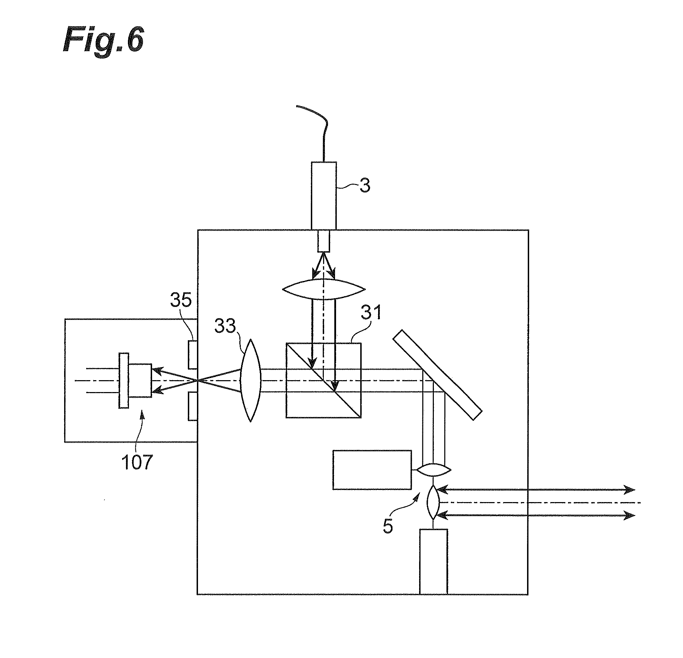

Fig. 6 illustrates a detailed structure of the optical signal detector 107 and its surroundings in the image generation device 101. As depicted, a beam splitter 31 is arranged between the exit port of the laser light source 3 constituted by an optical fiber and the optical signal detector 107 and the laser scanner 5. The beam splitter 31 transmits therethrough the reflected light and scattered light from the object A incident thereon through the laser scanner 5, so as to guide it to the optical signal detector 107, while reflecting the laser light from the laser light source 3, so as to guide it to the object A through the laser scanner 5, thereby separating the optical path of reflected light and scattered light from that of the laser light. Employable as the beam splitter 31 is a half mirror in which the ratio of reflectance to transmittance is 1:1 or one having such a predetermined relationship as the ratio of 8:2. When the laser light has a predetermined polarization component, a polarization beam splitter may be used as the beam splitter 31. In this case, a quarter-wave plate is inserted between the polarization beam splitter and the objective lens 25. Consequently, linearly polarized laser light, if any, incident on the quarter-wave plate from the polarization beam splitter side can be converted into circularly polarized light so as to irradiate the object A, while the reflected light from the object A, when passing through the quarter-wave plate again, can be converted into linearly polarized light whose phase differs by 90° from that at the time of incidence. As a result, the reflected light can be transmitted through the polarization beam splitter, so as to be guided to the optical signal detector 107.

A spatial filter 35 and a condenser lens 33 are arranged between the optical signal detector 107 and beam splitter 31. The spatial filter 35 is placed at a position conjugate to an end face of the fiber of the laser light source 3, so as to form a confocal optical system, while its filter diameter is configured so as to be substantially equal to the beam spot diameter produced on a plane conjugate to the fiber end face. The spatial filter 35 blocks a reflected/scattered component from a part deviated from a focal point in the reflected/scattered light having returned through the optical system from the object A.

The image generation device 101 explained in the foregoing can acquire a characteristic of reflected/scattered light occurring upon irradiation of the object A with a spatial modulation pattern as a pattern image having an improved resolution in the object. In addition, the phase and orientation of spatial modulation patterns of illumination light irradiating the object can be changed easily under the control of the modulation pattern control unit 15, so that a high-resolution image having a desirable position and orientation can be obtained rapidly.

### Third Embodiment

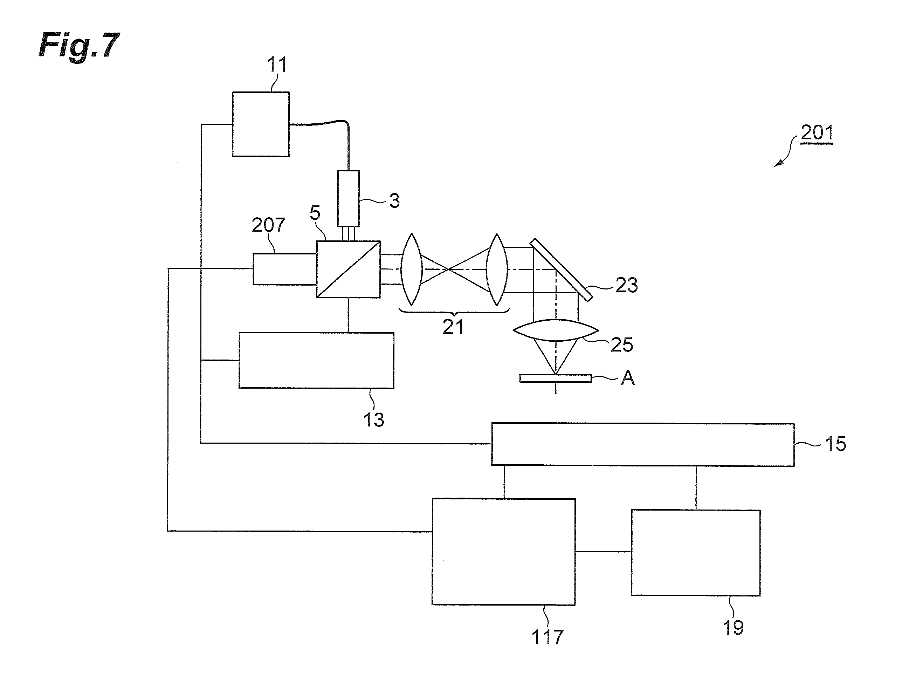

Fig. 7 is a block diagram illustrating the structure of an image generation device 201 in accordance with the third embodiment of the present invention. The image generation device 201 illustrated in this diagram is a device for irradiating an object to be measured such as a cell with excitation light having a plurality of spatial modulation patterns, detecting weak fluorescence issued from the object A in response thereto as an optical signal, and obtaining a high-resolution pattern image of the object on the basis of a characteristic distribution of the optical signal. This image generation device 201 differs from the second embodiment in the structure of its optical signal detector and the surroundings thereof.

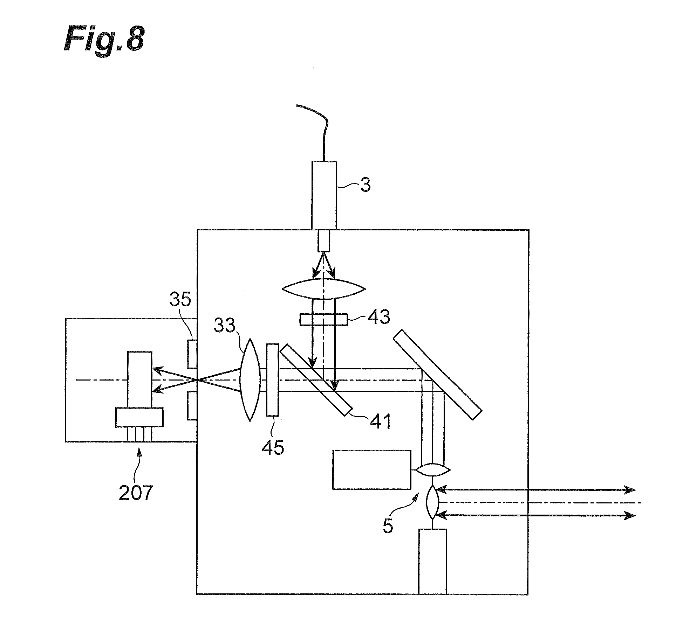

Employable as the optical signal detector 207 is a photoelectric transducer such as a photomultiplier which can output a characteristic value such as the intensity of weak fluorescence as an electric signal. As illustrated in Fig. 8, a dichroic mirror 41 is arranged instead of the beam splitter between the exit port of the laser light source 3 and the optical signal detector 207 and the laser scanner 5. The dichroic mirror 41 transmits therethrough the fluorescence from the object A incident thereon through the laser scanner 5 so as to guide it to the optical signal detector 207, while reflecting the laser light from the laser light source 3, so as to guide it to the object A through the laser scanner 5, thereby separating the optical path of florescence from that of the laser light. The dichroic mirror 41 is a mirror including a dielectric multilayer film having such an optical characteristic as to reflect and transmit shorter and longer wavelengths, respectively, which functions to reflect the excitation light incident thereon to the laser scanner 5 and transmit therethrough the fluorescence emitted from the object A.

An excitation wavelength selection filter 43 is disposed between the laser light source 3 and dichroic mirror 41. The excitation wavelength selection filter 43 is provided in order to select a wavelength suitable for a fluorescence excitation characteristic of the object A from wavelengths of the laser light source 3.

A barrier filter 45 is disposed between the optical signal detector 207 and dichroic mirror 41. The barrier filter 45 cuts off the excitation light so as to prevent it from reaching the optical signal detector 207 when optical signal detector 207 detects the fluorescence. This barrier filter is a longer-wavelength-transmitting high-pass filter which has such a property as to cut off the wavelength component of the excitation light by absorbing or reflecting it and transmit therethrough the wavelength component of the fluorescence or a bandpass filter which transmits therethrough only the wavelength component of the fluorescence.

Thus constructed image generation device 201 can acquire a characteristic of fluorescence occurring upon irradiation of the object A with a spatial modulation pattern as a pattern image having an improved resolution in the object. In addition, the phase and orientation of spatial modulation patterns of illumination light irradiating the object can be changed easily under the control of the modulation pattern control unit 15, so that a high-resolution image having a desirable position and orientation can be obtained rapidly.

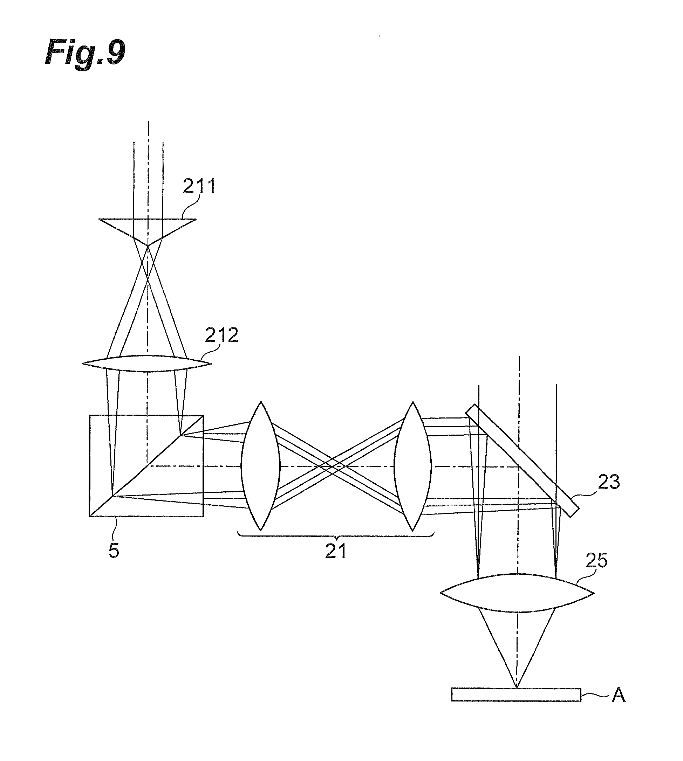

The present invention is not limited to the above-mentioned embodiments. For example, the structure illustrated in Fig. 9 may be employed as a structure of an optical system for guiding the illumination light in order to increase the contrast of the spatial modulation pattern irradiating the object A.

Specifically, an axicon 211 and a converter lens 212 may be inserted between the laser light source 3 and laser scanner 5. The axicon 211, which is a conical prism, is an optical element which converts a parallel beam having a circular cross section emitted from the laser light source 3 into a beam having a ring-shaped cross section. The converter lens 212 is a lens by which the ring-shaped beam emitted from the axicon 211 is projected as an annular form onto the laser scanner 5. Using such an optical system for illumination light can shape the laser light from the laser light source 3 into a ring form at the pupil position of the objective lens 25. This can reduce the half width of the laser light spot on the front face of the object A and thus can prevent the contrast of the spatial modulation pattern from decreasing when scanning the laser beam at an Airy disk diameter.

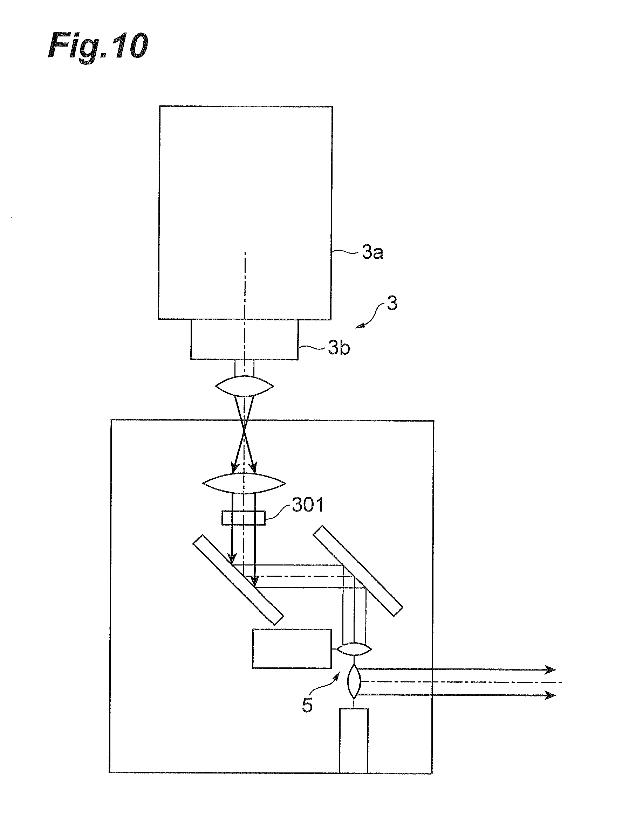

A structure which can observe multiphoton excitation such as two-photon excitation in the object A as illustrated in Fig. 10 may also be used as the laser light source 3 of the image generation devices 1, 101, 201. Specifically, a structure constituted by an ultrashort pulse laser 3a including a wavelength which enables the two-photon absorption in the object A as an emission wavelength and a laser modulator 3b for modulating its output is employed as the laser light source 3, and an excitation wavelength selection filter 301 for selecting a desirable wavelength component from the laser light is inserted between the laser light source 3 and laser scanner 5. The two-photon excitation is a phenomenon in which an electron is excited by two photons at a wavelength which is twice that of the original excitation light and thereby emits fluorescence. Therefore, the excitation wavelength selection filter 301 functions to transmit therethrough light having a wavelength which is twice that of the excitation wavelength of the fluorescent sample. When thus constructed laser light source 3 is employed, low-energy light having a long wavelength can be used, so as to suppress damages to the sample and exhibit such a high penetrability to the sample as to reach a deep part thereof, thereby enabling excitation taking advantage of the three dimensional locality of the excited location, which is a characteristic feature of the two-photon excitation. Also, as a characteristic feature of the two-photon excitation, a resolution on a par with that of a normal wavelength can be obtained even at twice the wavelength, which in combination of this technology can be expected to yield a higher resolution. When the structure of the laser light source 3 illustrated in Fig. 10 is used in combination with the image generation device 201, the dichroic mirror 41 and barrier filter 45 must be changed to those having different functions. Usable as the dichroic mirror 41 in this case is one having such an optical characteristic as to reflect and transmit longer and shorter wavelengths, respectively, which functions to reflect the excitation light having a longer wavelength incident thereon from the laser light source 3 side to the laser scanner 5 and transmit therethrough the fluorescence having a shorter wavelength emitted from the object A. Employable as the barrier filter 45 is a shorter-wavelength-transmitting low-pass filter having such a property as to cut off the longer wavelength component of the excitation light by absorbing or reflecting it and transmit therethrough the shorter wavelength component of the fluorescence or a bandpass filter which transmits therethrough only the wavelength component of the fluorescence.

Here, it will be preferred if the detection unit detects an electric signal issued from the object, while the signal generation unit generates characteristic distribution information associating the irradiation position information of the illumination light with characteristic information concerning a characteristic of the electric signal. In this case, an electric characteristic such as a current value of a photo induced current occurring in response to the irradiation of the object with the laser light can be acquired as a pattern image in the object, whereby the accuracy in analyzing characteristics of electric devices such as semiconductors can be improved.

It will also be preferred if the detection unit detects an optical signal issued from the object, while the signal generation unit generates characteristic distribution information associating the irradiation position information of the illumination light with characteristic information concerning a characteristic of the optical signal. When this structure is employed, a characteristic of light such as reflected light or fluorescence occurring upon the irradiation of the object with the laser light can be acquired as a pattern image having an improved resolution in the object.

It is also preferable for the laser light from the laser light source to include a wavelength enabling multiphoton absorption in the object. In this case, the effect on the object is on a par with the square and cube of the spot form in two- and three-photon absorptions, respectively, so that the signal generated is equivalent to that obtained by scanning with an effectively small spot, whereby stripes of modulation can be made finer, which makes it possible to further improve the resolution.

It is also preferable for the laser modulation unit to modulate the intensity of the laser light so that the intensity changes according to a trigonometric function. Providing such a laser modulation unit makes it easier to form the spatial modulation patterns.

### Industrial Applicability

The present invention is used for an image generation device which generates an image by irradiating an object to be measured with spatially modulated light and can obtain a pattern image of a sample having an improved resolution with a simple device structure.

### Reference Signs List

1, 101, 201... image generation device; 3...laser light source; 5...laser scanner (laser scanning unit); 7...electric signal detector (detection unit); 11...laser output control unit (laser modulation unit); 15... modulation pattern control unit; 17...electric signal imaging unit (signal generation unit); 19... image data operation unit (image processing unit); 107, 207...optical signal detector (detection unit); 117... optical signal imaging unit (signal generation unit); A... object to be measured

## Claims

1. An image generation device for generating an image of an object to be measured, the device comprising:
a laser light source for emitting laser light;
a laser modulation unit for modulating an intensity of the laser light;
a laser scanning unit for scanning an irradiation position of the laser light with respect to the object;
a control unit for controlling the laser modulation unit and laser scanning unit so as to irradiate the object with illumination light having a plurality of spatial modulation patterns;
a detection unit for detecting a signal issued from the object in response to irradiation with the illumination light having the plurality of spatial modulation patterns;
a signal generation unit for producing characteristic distribution information associating irradiation position information concerning the irradiation position of the illumination light controlled by the control unit with characteristic information concerning a characteristic of the signal detected by the detection unit in response to the irradiation with the laser light at the irradiation position and generating a two-dimensional characteristic image including a plurality of pieces of the characteristic distribution information corresponding to the spatial modulation pattern; and
an image processing unit for generating a pattern image of the object according to a plurality of the two-dimensional characteristic images generated so as to correspond to the plurality of spatial modulation patterns.

2. An image generation device according to claim 1, wherein the detection unit detects an electric signal issued from the object; and
wherein the signal generation unit generates characteristic distribution information associating the irradiation position information of the illumination light with characteristic information concerning a characteristic of the electric signal.

3. An image generation device according to claim 1, wherein the detection unit detects an optical signal issued from the object; and
wherein the signal generation unit generates characteristic distribution information associating the irradiation position information of the illumination light with characteristic information concerning a characteristic of the optical signal.

4. An image generation device according to one of claims 1 to 3, wherein the laser light from the laser light source includes a wavelength enabling multiphoton absorption in the object.

5. An image generation device according to one of claims 1 to 4, wherein the laser modulation unit modulates the intensity of the laser light so that the intensity changes according to a trigonometric function.
